# EUROPEAN PATENT SPECIFICATION

(11) **EP 0 980 298 B1**
(45) Date of publication and mention of the grant of the patent: **18.06.2003**
(21) Application number: 98923231.9
(22) Date of filing: 06.05.1998
(51) Int. Cl.: B23K 9/133

(54) **IMPROVEMENTS IN AND RELATING TO WELDING WIRE FEEDERS**
VERBESSERUNGEN AN ODER MIT BEZUG AUF SCHWEISSDRAHTVORSCHUBGERÄTE
PERFECTIONNEMENTS CONCERNANT DES DISPOSITIFS D'ALIMENTATION EN FIL DE SOUDAGE

(30) Priority: 06.05.1997 NZ 31475097
(43) Date of publication of application: 23.02.2000
(73) Proprietor: La Soudure Autogène Française, 95310 Saint Ouen L'Aumone (FR)
(72) Inventor: O'NEILL, David Royd, Hamilton 2001 (NZ)
(74) Representative: Le Moenner, Gabriel
(86) International application number: NZ9800058
(87) International publication number: WO98050191

(56) References cited:
- GB-A- 1 043 638
- K.W. BROWN : "Fine wire feeder for microplasma welding" METAL CONSTRUCTION AND BRITISCH WELDING JOURNAL, vol. 1, no. 4, April 1969, pages 169-173, XP002075503
- "Gas shielded arc welding The wire drive unit " PHILIPS WELDING REPORTER, vol. 303, no. 4, 1968, page 4 XP002075504

## Description

The present invention is directed to automatic wire feed apparatus for use in arc welding.

Automated feeders for welding wire are known in the prior art. These typically comprise assemblies able to mount a roll of welding wire and deliver the welding wire at a particular speed or within a particular range of speeds. Typically these machines are separate from the welding torch though in some instances may be attached to or near the torch assembly.

The two types of welding techniques with which wire feeders are generally used are TIG welding and MIG welding. For TIG welding, a common wire feed speed is up to 1200mm/minute though the optimum travel speeds for most of the manual hand held TIG welding techniques are at the lower end of this range.

In contrast, MIG welding has significantly higher wire feed speeds with feed speeds typically being within the range of 3000-21,000mm/minute.

Document K.W. Brown, "*Fine wire feeder for microplasma welding",* Metal Construction and British Welding Journal, Vol. 1, n°4, April 1969, p. 169-173, when which the preamble of claim 1 is based, discloses a wire feeder assembly comprising an electric motor coupled to a reduction gearbox, whose output is coupled to drive rollers to produce a wire feed speed within the range from 203,2 and 1930,4 mm/min. A similar teaching can be found in document *"Gas shielded arc welding. The wire drive unit",* Philips Welding Reporter, vol. 303, n°4, 1968, p.4.

Further, document GB-A-1043638 discloses a wire feeder assembly wherein the wire guide opening is precisely arranged with respect to the rollers in order to minimize the wear of the opening through which the wire electrode is guided.

There are a number of disadvantages associated with the prior art. Firstly, prior art feeders are limited in the maximum size of welding wire that they can feed. In the past, the maximum wire diameter commonly used for arc welding operations (such as TIG) was around 2.0 - 2.4 mm. However, the inventor has developed a new welding process where the welding torch assembly is propelled along the weld joints by using the welding wire to push against the article being welded. This new technique has introduced considerations which the prior art do not address.

For instance, significantly larger wire diameters are now able to be used without risk of burn-through or substrate damage. Prior art wire feeders are generally unable to accommodate the larger wire diameters now able to be used (above 2.4mm).

Further, in the past there was no significant resistance to the issuance of the welding wire from its guide and into the weld region. The only requirement was for the feeder to be able to keep up with how quickly the operator drew the torch along the weld line by hand. However, the demands on the wire feeder have now increased such that the wire feeder must not only propel the wire but also the torch assembly. Document WO-A-98/36865 describes a method in which the torch assembly is propelled along the weld line by the fed wire. This places high demands on the wire feed assembly which the prior art is unable to address. Prior art devices known to the applicant are unable to operate successfully in such conditions.

The welding speed along the joint is also increased over prior art welding processes. This introduces even further considerations into the design and construction of a wire feeder for use in such applications.

It is an object of the present invention to address the foregoing problems or at least to provide the public with a useful choice.

The solution of the invention is a wire feeder assembly including or comprising a wire feed portion in turn including an electric motor coupled to a reduction gearbox, whose output is coupled to at least one drive roller of a set of wire guide rollers, and wherein the arrangement of the wire feed portion being such that maximum torque for the motor corresponds to drive of the drive rollers to produce a wire feed speed within the range 100-1000 mm/min,
characterized in that it further includes a jog control for fine forward and reverse adjustment of the wire position.

The wire feeder assembly of the present invention may also comprise one or several of the following features :
- the arrangement of the wire feed portion is characterised in that the issuing wire is able to push against a resistance of 1.0kg before a variation of greater than a 5% drop in feed speed is experienced, when the assembly is set to deliver wire at a feed speed within the range of 200-800 mm/minute. Preferably, the resistance is 2.5kg. More preferably, the resistance is 5kg.
- the feed speed range through which resistance is determined, is from 100-1000 mm/minute.
- the guide roller set comprises at least one pair of opposed contacting rollers whose contacting circumferential surfaces include a channel portion for accommodating and guiding a wire.
- it includes a wire straightening portion for countering any bias in the wire to curve.
- the wire is wound at least partially about the circumference of a roller in a direction substantially opposed to that of any bias in the wire to curve.
- it includes means for mounting a wire supply.
- the wire feeder provides for the wire feed speed to be varied at least within a range of 0-2000 mm/min.
- maximum torque is at least partially achieved within the desired range by the use of suitable gearing rather than electronic speed control of the motor.
- it is constructed such that it is attachable to, or immediately preceding, a welding torch assembly.
- at least one of the following operating parameters is controllable from either or both at the modified wire feeder assembly or remotely therefrom: wire feed speed, wire feed direction and on/off control of the wire feeder assembly.
- a remote controller arrangement allows control of the provided operating parameters at or on the torch assembly.
- it comprises an automatic control of the wire feeder assembly from the torch assembly which is linked to the on/off control of the arc.
- there is provided a sensitivity control for the feed speed control.
- it comprises means for mounting a wire supply and leading this to the wire feed portion or wire straightening portion.

The wire feeder assembly, substantially as described above, is useable in conjunction with a TIG welding torch, for example a TIG welding torch has a carbon/PTFE liner.

The wire feeder assembly, substantially as described above, is useable in a welding technique in which the fed wire propels the welding torch along the weld line.

The present invention differs from the prior art in a number of manners. These differences reflect how the present invention attempts to address the shortcomings of the prior art, and in particular shortcomings of the prior art when used with self-propelled welding techniques such as described in document WO-A- 98/36865. For such techniques a high degree of resistance may be encountered by the fed wire. In the past, the welding torch was drawn along the weld line by hand and all that was required of the wire feeding device was to ensure that the wire was able to follow. There was little, if any. resistance encountered by the fed wire and thus relatively low powered motors and equipment could be used.

Typical of the prior art was the use of direct drive electric motors with electronic speed controllers. Electronic speed control is widely used within the art for controlling electric motors, and finds widespread use not only in wire feeders, but many domestic and industrial electric tools. However, there are a number of disadvantages associated with their use, including a reduction of the output torque of the motor. When this disadvantage is combined with relatively low powered electric motors, the result is a combination which performs satisfactorily with existing hand-drawn methods of TIG and MIG welding, but which are unable to cope with a situation in which the wire is required to propel the torch assembly.

Merely increasing the size of the electric motor does not represent a viable option. In order to produce the required amount of force on an issuing wire, a relatively powerful motor would be required. This in turn substantially increases the cost of the unit, as well as the bulk and weight of the unit (many of which are designed to be portable). In addition, the speed characteristics of a wire according to the present invention generally do not coincide the with optimum torque characteristics of most electric motors - the speeds are often lower than what may be optimum for the electric motor.

The present invention attempts to address these problems through the use of a reduction gear box chosen to enable a wire to be issued with greater force. Typically this can be achieved by the selection of a reduction gear box capable of matching the optimum torque characteristics of the chosen electric motor with the desired feed speed of the wire. Typically this is within the range of 100-1,000mm/minute, and more preferably within the range 200-800mm/minute. Ideally the maximum torque of the motor is produced within one of these ranges.

The gear box should also be selected so that a desired force against resistance to travel is imparted on the issuing wire. To some extent this will depend also upon the selection of the electric motor and the wire feed portion (for propelling the wire). Typically however, preferred embodiments of the present invention will be able to issue a wire which is able to push against a resistance of 1.0 kg before a variation of greater than a 5% drop in feed speed is experienced, when the assembly is set to deliver wire at a feed speed within a range of 200-800mm/minute. More preferably the resistance which is able to be acted on is 2.5 kg, and most ideally 5 kg or more.

Preferred embodiments of the present invention often include other components and reference will now be made to embodiments including those, so as to more clearly illustrate the relationship therebetween. These embodiments may comprise a modified wire feeder assembly in turn comprising: a wire feed portion for propelling a welding wire; a wire straightening portion for said welding wire, and preferably (though this may comprise a separate unit) means for mounting a wire supply and leading wire therefrom to either the wire feed or wire straightening portions.

The arrangement may vary according to different embodiments. Where a torch mounted embodiment is used, it may be more effective to have a reel mount located remotely from the feeder assembly, with the wire from the mounted reel being led to the feeder assembly. Preferably some sort of support or guide is used for at least part of the distance between the wire supply and the feeder assembly. It is envisaged that remotely locating the wire supply may also be used in embodiments other than torch mounted wire feeder assemblies.

Embodiments of the present invention have been developed to take into account problems associated with a welding technique in which the wire is used to propel the torch assembly along the weld joint. This raises a number of considerations in wire feeder design including the feed speed of the welding wire. It is envisaged, in most instances, that a wire feed speed of from 0 - 2.000mm/min. will be acceptable (for TIG welding) though higher feed speeds could be provided in various embodiments. However, in most situations, it is envisaged that embodiments should be able to provide a feed speed covering at least a range of 200 - 800mm/min, and more preferably from 100 - 1,000mm/min. - especially for the welding techniques being considered.

Because there may be significant resistance against the wire, it is desirable that maximum torque for any drive assembly should be reached within this speed range i.e. 100 - 1,000mm/min. More preferably, maximum torque should occur within the range 200 - 800mm/min.

It is desirable that the torque band width is such that the greatest torque is provided over as much of this range as possible, and ideally sufficient to be able to propel a torch assembly. This has also bee discussed previously.

There are a number of ways by which this may be achieved. While electronic control of the motor to allow it to operate within this speed range is a possibility, early attempts at this method by a leading manufacturer of wire feeders (at the request of the applicant) proved unsuccessful. While the resulting apparatus was able to feed a wire within the desired speed range, the torque was insufficient to propel a torch assembly along the weld joint. Accordingly, it is preferable that geared reduction means is used to match the torque and power characteristics of the motor with the desired feed speed range. Electronic motor speed control may also be used though this should not normally be the sole means of speed reduction of a driving motor.

An alternative solution is to rely on a plurality of drive motors limited solely or predominantly by electronic motor speed control. Here the combined torque and power of the motors should be able to drive a torch assembly along the weld joint. While this may be an acceptable solution, most types of electronic motor control will not allow high torques at low speeds (at least to the extent allowed by geared reduction). In addition, the use of multiple motors can increase overall costs due to duplication of components. Hence desirable embodiments of the invention include a reduction gearbox matched to the characteristics of the selected motor. In some embodiments, the gear box may allow for different gear ratios to be selected - much as in the manual gear box of a car - so as to allow the motor to provide greater torque for propelling the wire. This may also allow for finer control of the wire feed speed, especially at lower speeds. In addition, this could allow various embodiments to also be used for MIG welding techniques which typically use a much higher wire feed speed, but with the proviso that the higher torques would not be available for propelling the wire at these greater speeds. In some instances the speed of the motor may be stepped up by the gear box in order to achieve these speeds.

While the actual feed portion may vary in design and configuration, preferred embodiments rely upon a roller type drive assembly. Typically there is at least one pair, and preferably two pairs, of rollers with each pair aligned such that their circumferential faces sandwich a wire therebetween.

At least one drive roller of one pair should be driven, though preferably two rollers of a pair are driven from the gear box. Even more preferably, there are two sets of rollers each having at least one and preferably two drive rollers.

A groove at least partially accommodating and locating the wire may be provided about the periphery of one or both rollers in a pair. Suitable coatings which are resistant to wear but provide sufficient friction to drive a wire, may be provided on the peripheral surfaces of the rollers. These coatings or linings may also be resilient. Teeth or notches which bite into the surface of the welding wire can also be considered to increase grip.

Regardless of the torque output of the gear box and motor combination, high torques are of little use if the wire can slip with respect to the drive rollers. Consequently, consideration should be given to the number and nature of the drive rollers to ensure that the desired forces to be transmitted to the fed wire are in fact so transmitted.

Typically where multiple pairs of rollers are used, they should preferably be arranged such that the path of the wire therebetween is substantially linear. No kinks or twists, other than perhaps to counter any initial curving of the wire due to being stored on a reel, should be applied.

A wire straightening portion may also take a number of forms. Preferred embodiments will rely upon drawing the wire through a sequence of bearings or rollers distributed either side of the wire. These need not necessarily sandwich the wire between pairs of rollers - the distribution of rollers merely needs to define a substantially linear path through which the wire may travel. Various types of paths, races, guides, etc. may be used to help straighten the wire.

Pressure may be applied against the wire from different directions if considered necessary to counter any existing curving or bias in the wire. The bias of these externally applied forces against the wire may be adjustable.

For instance, in a preferred embodiment to be described later, a non-linear path which applies bias to the wire in a direction opposing its natural bias to curve (as a result of being stored on a reel) is applied. It is illustrated in a preferred embodiment described later herein.

Another problem which afflicts the prior art is friction causing wear on the components through which the welding wire passes. In the present situation where higher wire feed speeds may occur, and because it is also desirable to lessen resistance to ensure as much as possible of the drive motor's torque is applied to propelling a torch assembly rather than overcoming friction through the wire path, it is desirable to look at wire contacting surfaces and modify them accordingly. For components such as the rollers of the feed portion, reducing the friction of the drive rollers would not be recommended. However, non-driven rollers may be modified through the application of tough, low-friction resistant coatings. Similarly, wire contacting portions of the wire straightening assembly may also be similarly modified.

However, a significant proportion of friction often occurs at the torch assembly and thus it is also a consideration of the present invention to provide an improved liner, through which a welding wire passes, at the torch assembly. This may comprise a separate insert, or assembly, at the torch assembly.

While a number of friction reducing substances are known, many may be too soft for use unless frequent replacement is catered for. Accordingly, the preferred choice of a friction reducing material is a carbon - polytetrafluoroethylene (PTFE) material. Such composites and materials may be made to varying degrees of hardness and other physical characteristics. This will enable the user to select a particular formulation which provides a desired combination of low friction and wear.

Further features which may be included in various embodiments of the present invention include means for being able to provide for the control of the welding wire. In the prior art, controls for the feed of the welding wire generally comprise controls on the wire feed assembly allowing the feed speed of the wire to be varied, as well as an on/off facility. The prior art also provides for the wire feed assembly to be automatically turned on or off (according to whether the arc is activated at the torch) in some instances.

However, in a system where a wire is used to propel the torch assembly along the weld joint, it is important that the beginning of the welding wire can be accurately positioned with respect to the welding region when welding commences. The prior art machines do not normally provide sufficient control for such accuracy to be attained, and in many cases the user can only approximate positioning by some fiddling with the controls of the wire feeder assembly.

To address this, the present invention includes a jog shuttle, which can be similar to that found on editing video recorders, for accurately positioning the end of the welding wire to the starting point. Such a jog shuttle will allow both forward and reverse movement of the wire end.

Such a jog shuttle may operate in a number of ways. In a very simple form such a facility may comprise the equivalent of a video recorder's frame advance whereby the end of a wire is advanced in either direction by a pre-determined single increment. Provision may be made to be able to adjust the size of this increment.

In a slightly more sophisticated arrangement the facility may emulate the slow motion control on a video recorder. Activating the facility in either direction will continuously advance the welding wire in either direction at a pre-determined rate. Typically this is at a very slow speed and provision may be made to adjust this pre-determined speed.

In its more sophisticated form, the jog shuttle facility may allow for the advance or retract speed to be varied according to how far the control is positioned from its 'stop' position. Return-to-stop biasing may be provided

Various other controls may also be provided. This may include controls adjusting the sensitivity of other controls, especially those remotely located from the main unit. Directional control and on/off switches may also be provided. These and other controls may be provided on the main unit or remotely located therefrom.

When remotely located they may be provided on a separate handpiece which may be wired, or wire-lessly connected, to the main unit. These controls may also be located on the torch assembly though provision may be made for connection a handpiece to the torch assembly.

Further aspects of the present invention will become apparent from the following description which is given by way of example only and with reference to the accompanying drawings in which:
- Figure 1 is a schematic diagrammatic view of the preferred embodiment of the present invention, and
- Figure 2 is a variation of the embodiment of Figure 1.

With reference to the drawings and by way of example only there is provided a wire feeder assembly (generally indicated by arrow 1) comprising a wire feed portion (2) for propelling a welding wire (3), and a wire straightening portion (4), for said welding wire (3).

The source of the welding wire may comprise a reel (not shown for clarity) which feeds the cable (3) to the wire feeder assembly (1).

The wire straightening unit may comprise a number of forms though in the present invention there is provided three bearings (6 a-c) which are separated from each other and guide the wire (3) through a substantially linear path. In the illustrated embodiment, the position of bearing (6b) is adjustable by loosening the tightening screw and sliding the bearing's (6b) support (7) along its mounting portion.

The wire feed portion comprises two pairs (10, 11) of driven rollers, each having a substantially central locating groove (12) about their periphery. These serve to help locate the wire (3). The size of the groove (12) should accommodate the range of wire (3) sizes being catered for. In addition the outer surface (14) of each roller (or at least the drive roller 10a) may be coated with a high friction material which may also be partially resilient to accommodate different sized wires.

Either or both rollers of each pair may also be mounted such that their position may change. This may form some form of biasing means forcing the rollers of the pair towards each other, but allowing them to move sufficiently far apart to accommodate different size wires therebetween. Various mechanical arrangements for providing this movement are known and may be utilised in the various embodiments of the present invention.

At least one roller - this case roller (10a) - is driven. In this embodiment a drive means (20) comprising an electric motor has its output reduced by a gearbox (21) to drive roller (10a). Preferably the gearing arrangement is such that a high degree of torque may be provided throughout the wire speed range of 200-800/min.

Controlling the electric motor (20) is a controller unit (22) which may receive instructions from control switches (23) mounted on the body (24) of the assembly. These may control aspects such as switching the device on or off, direction of feed, speed of the wire feed, and the sensitivity of any remote controls which may be provided.

Illustrated is a remote control handpiece (25) which may be connected via various communication means, including wired and wire-less. This hand held piece may comprise any number of functions - these have been discussed previously within this specification.

Generally the wire is fed from the device into a torch handpiece (30). In some instances, providing the unit (1) is manufactured in a compact manner, the torch assembly and wire feeder unit (1) may be connected to each other or in close proximity to one another. Controls (25) may be provided on the torch handpiece though there may also be provision for the connection of a separable handpiece to the torch assembly (30).

Provided in the illustrated torch assembly (30) is a removable liner (31) which can be removed by separating the two halves (32, 33) of the torch assembly (30). This liner (31) may be constructed of a suitably hard material such as steel and provided with an internal lining of a low friction and preferably abrasion resistant substance. Carbon/PTFE composite materials are a preferred choice. These materials may also line other guide portions on other pieces of equipment e.g. (35, 36).

### Example 2

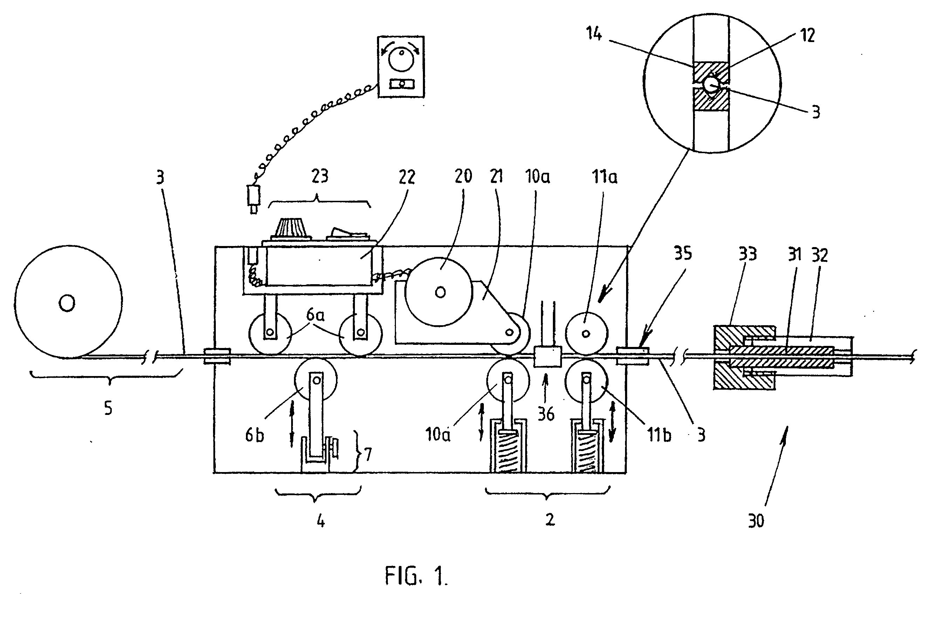

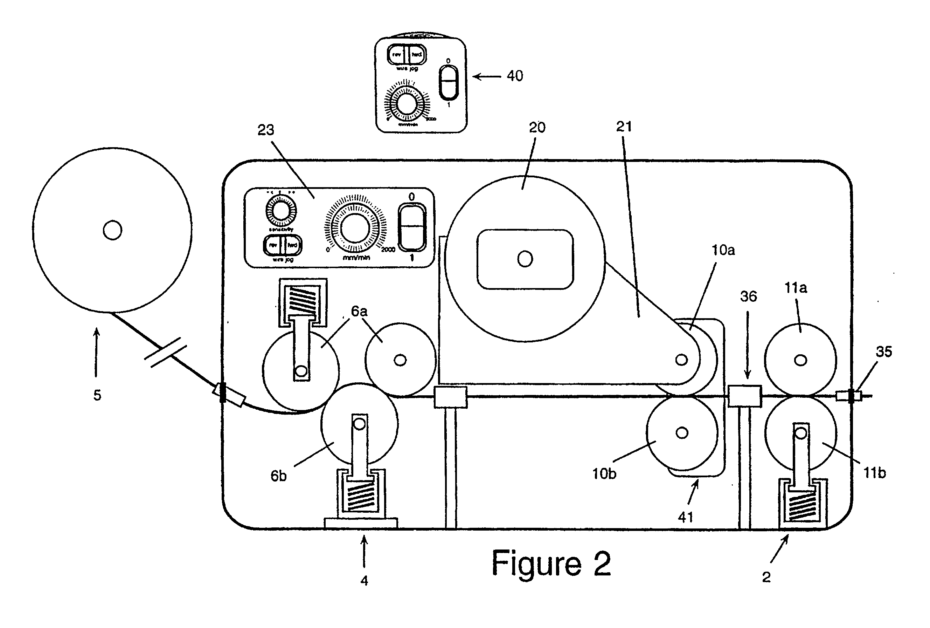

Figure 2 represents a slight variation of the embodiment of Figure 1. In this embodiment different bias is applied by rollers (6a and 6b) in the wire straightening portion. Here the wire is curved in a direction opposite to its inherent bias to curve as a result of being stored on the reel (5). The rollers (6a, 6b) are also in contact with each other to also reduce the tendency of the wire to rotate about its axis.

The chosen motor in this embodiment is a 0.18 kW DC permanent magnet electric motor. This is coupled to a gear box (21) which offers a reduction of 120:1. A preferred motor is a Baldor Model GPP7477 motor. A second gear reduction is effected in the coupling of the gearbox to the drive rollers. This reduction can range from 1:1 to 2:1, depending on user choice.

Drive roller (10a) is driven as is drive roller (10b) via additional drive coupling (41). The diameter of each drive roller is 45mm.

A wireless controller (40) offering stop/start control, speed control, and a jog control in the form of return-to-centre toggle switch is also provided. Motor speed control in the range of 25-100% of full rated speed is provided. This corresponds to a speed range, after the first reduction gear box, of from 7-21 rpm.

Aspects of the present invention have been described by way of example only and it should be appreciated that modifications and additions may be made thereto without departing from the scope thereof as defined in the appended claims.

## Claims

1. Wire feeder assembly (1) including or comprising a wire feed portion (2) including an electric motor (20) coupled to a reduction gearbox (21), whose output is coupled to at least one drive roller (10a, 10b, 11a, 11b) of a set of wire guide rollers (10, 11), and wherein the arrangement of the wire feed portion (2) being such that maximum torque for the motor (20) corresponds to drive of the drive rollers to produce a wire feed speed within the range from 100 to 1000 mm/min,
**characterized in that** it further includes a jog control for fine forward and reverse adjustment of the wire position.

2. Wire Feeder assembly according to claim 1,
wherein the arrangement of the wire feed portion (2) is **characterised in that** the issuing wire (3) is able to push against a resistance of 1,0kg before a variation of greater than a 5% drop in feed speed is experienced, when the assembly is set to deliver wire at a feed speed within the range of 200-800 mm/minute.

3. Wire feeder assembly according to any one of claims 1 or 2, in which the guide roller set comprises at least one pair of opposed contacting rollers 10a, 10b, 11a, 11b whose contacting circumferential surfaces include a channel portion (12) for accommodating and guiding a wire.

4. Wire feeder assembly according to any one of the preceding claims in which a guide roller has a compressible resilient material about the circumferential face which contacts the wire.

5. Wire feeder assembly according to any one of the preceding claims, in which there are at least two pairs of opposed contacting guide roller 10a, 10b, 11a, 11b, which each sandwich the wire (3) between substantially contacting circumferential surfaces, and wherein both rollers of one said pair are drive rollers.

6. Wire feeder assembly according to any one of the preceding claims, which includes a wire straightening portion for countering any bias in the wire to curve.

7. Wire feeder assembly according to claim 6, in which the wire straightening portion includes at least one roller (6a,6b) with which the wire (3) is in contact.

8. Wire feeder assembly according to claim 6, in which the wire (3) is wound at least partially about the circumference of a roller (6a,6b) in a direction substantially opposed to that of any bias in the wire to curve.

9. Wire feeder assembly according to any one of the preceding claims, which includes means for mounting a wire supply.

10. Wire feeder assembly according to any one of the preceding claims capable of feeding wire (3) to at least 1200 mm/minute.

11. Wire feeder assembly according to any one of the preceding claims, which includes electronic feed control (22) of motor speed.

12. Wire feeder assembly according to any one of the preceding claims, which includes a carbon/PTFE liner (31) at its wire feed outlet.

13. Wire feeder assembly according to claim 9, comprising an additional drive coupling (41) for driving drive rollers (10a, 10b).

14. Wire feeder assembly according to any one of the preceding claims, capable of propelling wires within at least the range of 0.8-3.2mm.

15. Wire feeder assembly according to any one of the preceding claims which is remotely controllable.

16. Wire feeder assembly according to claim 15, in which the wire feeder assembly is controllable from an arc welding torch assembly.

17. Wire feeder assembly according to claim 16 in which stop and start control of the wire feed is linked to the on and off control of the arc of the welding torch.

18. Wire feeder assembly according to any one of claims 15 to 17 which includes a sensitivity control for controlling the response to a remote controller.

19. Use of a wire feeder assembly according to any one of the preceding claims in conjunction with a TIG welding torch.

20. Use according to claim 19 in which the fed wire propels the welding torch along the weld line.

## Patentansprüche

1. Drahtvorschubeinrichtung (1), die einen Drahtvorschubteil (2) mit einem Elektromotor (20) beinhaltet oder umfasst, der an ein Untersetzungsgetriebe (21) angekoppelt ist, dessen Ausgang an zumindest eine Antriebsrolle (10a, 10b, 11a, 11b) eines Satzes von Drahtführungsrollen (10, 11) angekoppelt ist, und wobei die Anordnung des Drahtvorschubteils (2) derart ist, dass das maximale Drehmoment für den Motor (20) einem Antrieb der Antriebsrollen zur Erzeugung einer Drahtvorschubgeschwindigkeit im Bereich von 100 bis 1000 mm/min entspricht,
**dadurch gekennzeichnet, dass** sie außerdem eine Vorrücksteuerung zur feinen Vorwärts- und zur Rückwärtseinstellung der Drahtposition beinhaltet.

2. Drahtvorschubeinrichtung nach Anspruch 1, wobei die Anordnung des Drahtvorschubteils (2) **dadurch gekennzeichnet ist, dass** der austretende Draht (3) in der Lage ist, gegen einen Widerstand von 1,0 kg zu drücken, bevor eine Schwankung von mehr als einem Abfall von 5% der Vorschubgeschwindigkeit auftritt, wenn die Einrichtung darauf eingestellt ist, einen Draht mit einer Vorschubgeschwindigkeit in dem Bereich von 200-800 mm/Minute vorzuschieben.

3. Drahtvorschubeinrichtung nach einem der Ansprüche 1 oder 2, bei der der Führungsrollensatz zumindest ein Paar gegenüberliegender Kontaktrollen (10a, 10b, 11a, 11b) umfasst, deren Kontakt habende Umfangsflächen einen Kanalabschnitt (12) zur Aufnahme und Führung eines Drahts beinhalten.

4. Drahtvorschubeinrichtung nach einem der vorhergehenden Ansprüche, bei der eine Führungsrolle um die Umfangsfläche herum ein kompressibles, elastisches Material aufweist, das mit dem Draht Kontakt hat.

5. Drahtvorschubeinrichtung nach einem der vorhergehenden Ansprüche, bei der zumindest zwei Paare von gegenüberliegenden Kontaktführungsrollen (10a, 10b, 11a, 11b) vorhanden sind, die jeweils den Draht (3) zwischen im Wesentlichen Kontakt habenden Umfangsflächen einklemmen, und wobei beide Rollen eines Paares Antriebsrollen sind.

6. Drahtvorschubeinrichtung nach einem der vorhergehenden Ansprüche, die einen Drahtbegradigungsteil umfasst, um jeglicher biegender Vorspannung in dem Draht entgegenzuwirken.

7. Drahtvorschubeinrichtung nach Anspruch 6, bei der der Drahtbegradigungsteil zumindest eine Rolle (6a, 6b) beinhaltet, mit der der Draht (3) Kontakt hat.

8. Drahtvorschubeinrichtung nach Anspruch 6, bei der der Draht (3) zumindest teilweise um den Umfang einer Rolle (6a, 6b) in einer Richtung gewickelt ist, die zu derjenigen einer beliebigen biegenden Vorspannung in dem Draht entgegengesetzt ist.

9. Drahtvorschubeinrichtung nach einem der vorhergehenden Ansprüche, die Mittel zur Halterung einer Drahtversorgungsvorrichtung beinhaltet.

10. Drahtvorschubeinrichtung nach einem der vorhergehenden Ansprüche, die in der Lage ist, den Draht (3) mit zumindest 1200 mm/Minute vorzuschieben.

11. Drahtvorschubeinrichtung nach einem der vorhergehenden Ansprüche, die eine elektronische Vorschubsteuerung (22) der Motorgeschwindigkeit beinhaltet.

12. Drahtvorschubeinrichtung nach einem der vorhergehenden Ansprüche, die eine Carbon/PTFE-Verkleidung (31) an ihrem Drahtvorschubauslass beinhaltet.

13. Drahtvorschubeinrichtung nach Anspruch 9 mit einer zusätzlichen Antriebskopplung (41) zum Antreiben von Antriebsrollen (10a, 10b).

14. Drahtvorschubeinrichtung nach einem der vorhergehenden Ansprüche, die in der Lage ist, Drähte in zumindest dem Bereich von 0,8-3,2 mm vorzutreiben.

15. Drahtvorschubeinrichtung nach einem der vorhergehenden Ansprüche, die fernsteuerbar ist.

16. Drahtvorschubeinrichtung nach Anspruch 15, bei der die Drahtvorschubeinrichtung durch eine Lichtbogenschweißbrennereinrichtung steuerbar ist.

17. Drahtvorschubeinrichtung nach Anspruch 16, wobei die Stopp- und Startsteuerung des Drahtvorschubs mit der Ein- und Aussteuerung des Lichtbogens des Schweißbrenners verbunden ist.

18. Drahtvorschubeinrichtung nach einem der Ansprüche 15 bis 17, die eine Empfindlichkeitssteuerung zur Steuerung der Reaktion auf eine Fernsteuerung beinhaltet.

19. Verwendung einer Drahtvorschubeinrichtung nach einem der vorhergehenden Ansprüche in Verbindung mit einem TIG-Schweißbrenner.

20. Verwendung nach Anspruch 19, bei der der vorgeschobene Draht den Schweißbrenner entlang der Schweißlinie vorwärts treibt.

## Revendications

1. Ensemble d'alimentation en fil de soudage (1) incluant ou comprenant une partie d'alimentation en fil de soudage (2) incluant un moteur électrique (20) accouplé à un boîtier réducteur (21), dont la sortie est accouplée à au moins un rouleau d'entraînement (10a, 10b, 11a, 11b) d'un ensemble de rouleaux de guidage du fil de soudage (10, 11), et dans lequel l'agencement de la partie d'alimentation en fil de soudage (2) est tel que le couple maximum du moteur (20) correspond à l'entraînement des rouleaux d'entraînement pour produire une vitesse d'avance du fil comprise dans une fourchette de 100 à 1000 mm/minute,
**caractérisé en ce qu'**il comprend en outre une commande de pas à pas pour permettre un ajustement fin en avant ou en arrière de la position du fil.

2. Ensemble d'alimentation en fil de soudage selon la revendication 1, dans lequel l'agencement de la partie d'alimentation en fil (2) est **caractérisé en ce que** le fil émis (3) est capable de pousser contre une résistance de 1,0 kg avant qu'une variation supérieure à une baisse de 5% dans la vitesse du fil ne soit enregistrée, quand l'ensemble est réglé pour délivrer le fil à une vitesse d'alimentation comprise dans une fourchette de 200-800 mm/minute.

3. Ensemble d'alimentation en fil de soudage selon l'une quelconque des revendications 1 ou 2, dans lequel l'ensemble de rouleaux de guidage comprend au moins une paire de rouleaux de contact opposés (10a, 10b, 11a, 11b) dont les surfaces des circonférences qui sont en contact comprennent une partie en forme de canal (12) pour recevoir et guider un fil.

4. Ensemble d'alimentation en fil de soudage selon l'une quelconque des revendications précédentes, dans lequel un rouleau de guidage est doté d'un matériau élastique compressible sur la face de sa circonférence qui est en contact avec le fil.

5. Ensemble d'alimentation en fil de soudage selon l'une quelconque des revendications précédentes, dans lequel il y a au moins deux paires de rouleaux de guidage opposés en contact (10a, 10b, 11a, 11b) qui prennent chacune en sandwich le fil (3) entre des surfaces de circonférence sensiblement en contact, et dans lequel les deux rouleaux d'une desdites paires sont des rouleaux menants.

6. Ensemble d'alimentation en fil de soudage selon l'une quelconque des revendications précédentes, qui comprend une partie de redressement de fil pour contrer toute force en biais dans le fil susceptible de le courber.

7. Ensemble d'alimentation en fil de soudage selon la revendication 6, dans lequel la partie de redressement de fil comprend au moins un rouleau (6a, 6b) avec lequel le fil (3) est en contact.

8. Ensemble d'alimentation en fil de soudage selon la revendication 6, dans lequel le fil (3) est enroulé au moins partiellement autour de la circonférence d'un rouleau (6a, 6b) dans une direction sensiblement opposée à celle de toute force en biais dans le fil susceptible de le courber.

9. Ensemble d'alimentation en fil de soudage selon l'une quelconque des revendications précédentes, qui comprend un moyen pour monter une alimentation de fil.

10. Ensemble d'alimentation en fil de soudage selon l'une quelconque des revendications précédentes, capable d'alimenter le fil (3) à au moins 1200 mm/minute.

11. Ensemble d'alimentation en fil de soudage selon l'une quelconque des revendications précédentes, qui comprend une commande électronique d'alimentation (22) de la vitesse du moteur.

12. Ensemble d'alimentation en fil de soudage selon l'une quelconque des revendications précédentes, qui comprend une chemise en carbone/PTFE (31) à sa sortie d'alimentation de fil.

13. Ensemble d'alimentation en fil de soudage selon la revendication 9, comprenant un accouplement d'entraînement supplémentaire (41) pour entraîner les rouleaux menants (10a, 10b).

14. Ensemble d'alimentation en fil de soudage selon l'une quelconque des revendications précédentes, capable d'alimenter des fils compris au moins dans la fourchette de 0,8-3,2 mm.

15. Ensemble d'alimentation en fil de soudage selon l'une quelconque des revendications précédentes, qui peut être commandé à distance.

16. Ensemble d'alimentation en fil de soudage selon la revendication 15, dans lequel l'ensemble d'alimentation en fil de soudage peut être commandé à partir d'un ensemble de torche de soudage à l'arc.

17. Ensemble d'alimentation en fil de soudage selon la revendication 16, dans lequel la commande de d'arrêt et de marche de l'alimentation en fil de soudage est reliée à la commande de marche et d'arrêt de l'arc de la torche de soudage.

18. Ensemble d'alimentation en fil de soudage selon l'une quelconque des revendications 15 à 17, qui comprend une commande de sensibilité pour commander la réponse à un contrôleur à distance.

19. Utilisation d'un ensemble d'alimentation en fil de soudage selon l'une quelconque des revendications précédentes conjointement avec une torche de soudage TIG.

20. Utilisation selon la revendication 19, dans laquelle le fil alimenté propulse la torche de soudage le long de la ligne de soudure.
